(19) Europäisches Patentamt
European Patent Office
Office européen des brevets

(11) **EP 3 498 551 B1**

(12) **EUROPÄISCHE PATENTSCHRIFT**

(45) Veröffentlichungstag und Bekanntmachung des Hinweises auf die Patenterteilung:
**24.06.2020 Patentblatt 2020/26**

(51) Int Cl.:
**B60T 13/58** *(2006.01)* **B60T 13/66** *(2006.01)*

(21) Anmeldenummer: **18209207.2**

(22) Anmeldetag: **29.11.2018**

(54) **VERFAHREN ZUR STEUERUNG EINES BREMSSYSTEMS ZUR EINSTELLUNG EINER GESAMTBREMSMOMENTAUFTEILUNG ZWISCHEN EINER ERSTEN UND EINER ZWEITEN ACHSE EINES KRAFTFAHRZEUGS SOWIE EIN BREMSSYSTEM ZUR DURCHFÜHRUNG DES VERFAHRENS**

METHOD FOR CONTROLLING A BRAKING SYSTEM FOR ADJUSTING A TOTAL BRAKE POWER DISTRIBUTION BETWEEN A FIRST AND A SECOND AXLE OF A MOTOR VEHICLE AND BRAKE SYSTEM FOR CARRYING OUT THE METHOD

PROCÉDÉ DE COMMANDE D'UN SYSTÈME DE FREINAGE PERMETTANT DE RÉGLER UNE RÉPARTITION TOTALE DU COUPLE DE FREINAGE ENTRE UN PREMIER ET UN SECOND AXES D'UN VÉHICULE AUTOMOBILE AINSI QUE SYSTÈME DE FREINAGE PERMETTANT LA MISE EN UVRE DUDIT PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2017 DE 102017223064**

(43) Veröffentlichungstag der Anmeldung:
**19.06.2019 Patentblatt 2019/25**

(73) Patentinhaber: **AUDI AG**
**85045 Ingolstadt (DE)**

(72) Erfinder:
• **Wein, Michael**
**92358 Seubersdorf (DE)**
• **Geuß, Matthias**
**96149 Breitengüßbach (DE)**

(56) Entgegenhaltungen:
**WO-A1-2015/198119       WO-A2-2006/029353**
**DE-A1-102015 106 746   US-A1- 2004 122 579**
**US-A1- 2013 162 009**

**Beschreibung**

Die Erfindung betrifft ein Verfahren zur Steuerung eines Bremssystems zur Einstellung einer Gesamtbremsmomentaufteilung zwischen einer ersten und einer zweiten Achse eines Kraftfahrzeugs gemäß der im Oberbegriff des Patentanspruches 1 angegebenen Art sowie ein Bremssystem zur Durchführung des Verfahrens gemäß dem Patentanspruch 5.

Kraftfahrzeuge, deren Gesamtbremsmoment von einer einen Reibbremsmomentanteil erzeugenden Reibungsbremsvorrichtung und einer einen rekuperativen Bremsmomentanteil erzeugenden rekuperativen Bremsvorrichtung erzeugt wird, sowie entsprechende Verfahren zur Steuerung des Bremssystems zur Einstellung einer gewünschten Gesamtbremsmomentaufteilung zwischen den Achsen des Kraftfahrzeugs sind hinreichend bekannt. Lediglich beispielhaft wird auf die DE 10 2015 106 746 A1 verwiesen.

Bekanntlich wird dabei in Fahrsituationen mit drohender Instabilität der rekuperative Bremsmomentanteil auf Null zurückgefahren, d.h. das Gesamtbremsmoment wird dann ausschließlich von der Reibungsbremsvorrichtung erzeugt, um z.B. für das ABS-System mehr Arbeitsspielraum zur Verfügung zu stellen. Als nachteilig erweist sich hierbei, dass - da der rekuperative Bremsmomentanteil auf Null zurückgefahren wurde - konsequenterweise nunmehr auch kein rekuperativer Bremsmomentanteil zur Einstellung der Gesamtbremsmomentaufteilung mehr zur Verfügung steht.

Ein Bremssystem, welches eingerichtet ist, dass für alle Fahrsituationen an einer Achse ein Rekuperationsmoment als rekuperativer Bremsmomentanteil eingestellt verbleibt, ist aus der US 2013/0162009 A1 bekannt.

Der Erfindung liegt die Aufgabe zu Grunde ein Verfahren zur Steuerung eines Bremssystems zur Einstellung einer Gesamtbremsmomentaufteilung anzugeben, mittels dem auch im Falle einer drohenden Instabilität das auf die Achsen aufzuteilende Gesamtbremsmoment einen rekuperativen Bremsmomentanteil umfasst.

Diese Aufgabe wird durch die kennzeichnenden Merkmale des Patentanspruches 1 in Verbindung mit seinen Oberbegriffsmerkmalen gelöst.

Die Unteransprüche 2 bis 4 bilden vorteilhafte Weiterbildungen des erfindungsgemäßen Verfahrens.

In bekannter Art und Weise wird das Gesamtbremsmoment von einer ein Reibbremsmomentanteil erzeugenden Reibungsbremsvorrichtung und einer einen rekuperativen Bremsmomentanteil erzeugenden rekuperativen Bremsvorrichtung zur Verfügung gestellt und das Gesamtbremsmoment wird im Falle einer Bremsanforderung in einem vorgebbaren Bremsmomentverhältnis W1/W2 auf die Achsen des Kraftfahrzeugs aufgeteilt, wobei für die Aufteilung des Reibbremsmomentanteils auf die Achsen eine konstante Reibbremsmomentverteilung B1/B2 vorgegeben ist.

Erfindungsgemäß ist nunmehr vorgesehen, dass - wenn B1≠W1 - für eine Achse ein Mindestrekuperationsmoment bestimmt wird, das an der bestimmten Achse gestellt wird und das für alle Fahrsituationen an der bestimmten Achse als rekuperativer Bremsmomentanteil eingestellt verbleibt.

Durch das erfindungsgemäße Verfahren ist nunmehr in vorteilhafter Weise sichergestellt, dass auch in Fahrsituationen mit einer drohenden Instabilität die Aufteilung des Gesamtbremsmoments auf die Achsen des Kraftfahrzeugs unter Berücksichtigung eines rekuperativen Bremsmomentanteils erfolgt.

D.h. es ist nunmehr erfindungsgemäß gewährleistet, dass die gemäß dem vorgegebenen bzw. gewünschten Bremsmomentverhältnis W1/W2 auf die Achsen aufgeteilte Gesamtbremsmomentaufteilung stets eine rekuperativen Bremsmomentanteil aufweist.

Hierzu wird verfahrensgemäß zunächst die Achse bestimmt, an der das Mindestrekuperationsmoment zu stellen ist und es wird das Mindestrekuperationsmoment für diese Achse berechnet. Anschließend wird das für beide Achsen verbleibende Restreibmoment bestimmt und die gewünschte Gesamtbremsmomentverteilung wird unter Berücksichtigung des an der bestimmten Achse zu stellenden Mindestrekuperationsmoments gestellt.

Dabei wird, wenn W1<B1, bestimmt, dass das Mindestrekuperationsmoment $M_{B,Rek,Min}$ an der zweiten Achse A2 zu stellen ist und das Mindestrekuperationsmoment $M_{B,Rek,Min}$ wird gemäß der Vorschrift

$$M_{B,Rek,Min,} = M_{B,Ges} * \left(1 - \frac{W1}{B1}\right)$$

bestimmt. Das für beide Achsen verbleibende Restreibmoment $M_{B,Reib,rest}$ wird gemäß der Vorschrift

$$M_{B,Reib,rest} = M_{B,Ges} * \frac{W1}{B1}$$

berechnet. An der zweiten Achse A2 ergibt sich ein zu stellendes Restmomentanteil $M_{B,Reib,A2}$ von

$$M_{B,\mathrm{Reib},A2} = M_{B,\mathrm{Reib},rest} * B2$$

und an der ersten Ache A1 ein zu stellendes Restreibmoment $M_{B,\mathrm{Reib},A1}$ von

$$M_{B,\mathrm{Reib},A1} = M_{B,\mathrm{Reib},rest} * B1 \quad .$$

Für den Fall, dass W1 >B1 wird bestimmt, dass das Mindestrekuperationsmoment $M_{B,\mathrm{Rek},Min}$ an der ersten Achse A1 zu stellen ist. In diesem Fall wird das an der ersten Achse A1 zu stellende Mindestrekuperationsmoment $M_{B,\mathrm{Rek},Min}$ gemäß der Vorschrift

$$M_{B,\mathrm{Rek},Min,} = M_{B,Ges} * \left( 1 - \frac{W2}{B2} \right)$$

und das für beide Achsen verbleibende Restreibmoment $M_{B,\mathrm{Reib}.Rest}$ gemäß der Vorschrift

$$M_{B,\mathrm{Reib},rest} = M_{B,Ges} * \frac{W2}{B2}$$

bestimmt. Die an der ersten Achse A1 bzw. zweiten Achse zu stellenden Restreibmomente $M_{B,\mathrm{Reib},A1}$ bzw. $M_{B,\mathrm{Reib},A2}$ ergeben sich zu

$$M_{B,\mathrm{Reib},A1} = M_{B,\mathrm{Reib},rest} * B1$$

bzw.

$$M_{B,\mathrm{Reib},A2} = M_{B,\mathrm{Reib},rest} * B2 \quad .$$

Lediglich der Vollständigkeit halber wird darauf hingewiesen, dass in obige Formeln die Werte B1, B2, W1 sowie W2 als Prozentwerte einzusetzen sind. D.h. sollte die Verteilung B1/B2 oder das Verhältnis W1/W2 nicht als Prozentwerte angegeben sein, so sind diese entsprechend umzurechnen.

Beispiel 1

Gegeben W1/W2 = 1/1

⇨ Umrechnen in Prozentwerte ergibt:

$$W1[\%] = \frac{W1}{W1 + W2} * 100\% \quad => W1 = 50\% = 0,5$$

bzw.

$$W2[\%] = \frac{W2}{W1 + W2} * 100\% \quad => W2 = 50\% = 0,5$$

Beispiel 2

Gegeben B1/B2 = 60/40

⇨ Umrechnen in Prozentwerte ergibt:

$$B1[\%] = \frac{B1}{B1+B2} * 100\% \qquad => B1 = 60\% = 0,6$$

bzw.

$$B2[\%] = \frac{B2}{B1+B2} * 100\% \qquad => B2 = 40\% = 0,4$$

Der Erfindung liegt des Weiteren die Aufgabe zu Grunde ein Bremssystem zur Durchführung des Verfahrens gemäß den Ansprüchen 1 bis 4 anzugeben.

Diese Aufgabe wird durch den Patentanspruch 5 gelöst.

Das erfindungsgemäße Bremssystem umfasst eine Reibungsbremsvorrichtung, eine rekuperative Bremsvorrichtung sowie eine Regel-Steuereinheit, die die Reibungsbremsvorrichtung und die rekuperative Bremsvorrichtung ansteuert, um im Falle einer Bremsanforderung die Gesamtbremsmomentaufteilung im gewünschten Bremsmomentverhältnis W1/W2 zu stellen. Die Regel-Steuereinheit ist dabei ferner derart eingerichtet ein an einer Achse zu stellendes Mindestrekuperationsmoment und ein verbleibendes Restreibmoment zu bestimmen und im Falle einer Bremsanforderung die im gewünschten Bremsmomentverhältnis W1/W2 zu stellende Gesamtbremsmomentaufteilung unter Berücksichtigung des Mindestrekuperationsmoments an den Achsen zu stellen, wobei für alle Fahrsituationen an einer Achse ein Mindestrekuperationsmoment als rekuperativer Bremsmomentanteil eingestellt verbleibt.

Durch das erfindungsgemäße Bremssystem ist nunmehr in vorteilhafter Weise gewährleistet, dass die gemäß dem vorgegebenen bzw. gewünschten Bremsmomentverhältnis W1/W2 auf die Achsen aufgeteilte Gesamtbremsmomentaufteilung stets einen rekuperativen Bremsmomentanteil aufweist.

Weitere Vorteile und Anwendungsmöglichkeiten der vorliegenden Erfindung ergeben sich aus der nachfolgenden Beschreibung in Verbindung mit dem in der Zeichnung dargestellten Ausführungsbeispiel.

In der Zeichnung bedeutet:

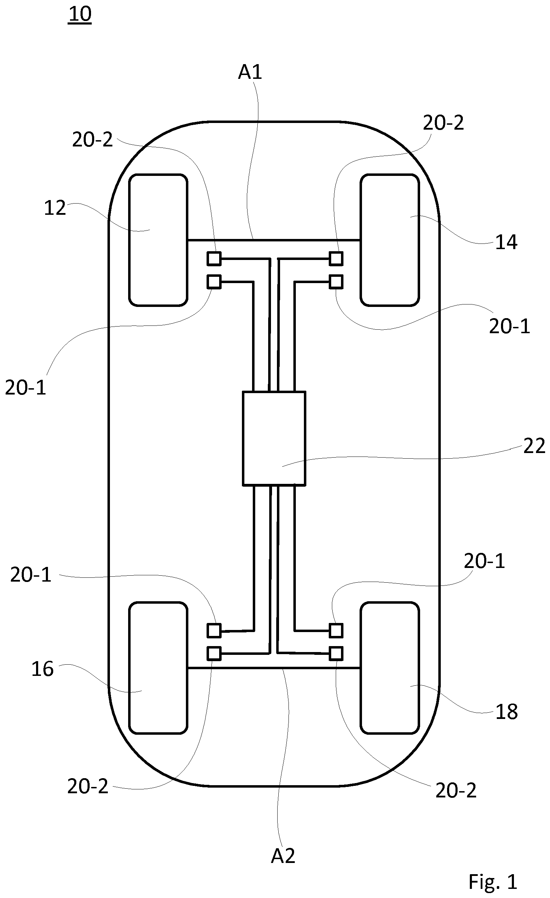

Fig. 1    eine schematische Darstellung eines Kraftfahrzeugs zur Verdeutlichung des Verfahrens zur Steuerung eines Bremssystems zur Einstellung einer Gesamtbremsmomentaufteilung zwischen einer ersten und einer zweiten Achse eines Kraftfahrzeugs.

Fig. 1 zeigt in einer schematischen Darstellung ein insgesamt mit der Bezugsziffer 10 bezeichnetes Kraftfahrzeug. Die Vorderachse, nachfolgend auch als erste Achse bezeichnet, ist mit dem Bezugszeichen A1 und die Hinterachse, nachfolgend auch als zweite Achse bezeichnet, ist mit dem Bezugszeichen A2 bezeichnet.

Den Rädern 12, 14 der ersten Achse A1 sowie den Rädern 16, 18 der zweiten Achse A2 ist jeweils eine - hier nur schematisch angedeutete - Reibungsbremsvorrichtung 20-1 sowie eine rekuperative Bremsvorrichtung 20-2 zugeordnet. Das gesamte, von der Reibungsbremsvorrichtung 20-1 und der rekuperativen Bremsvorrichtung 20-2 zu erzeugende Gesamtbremsmoment $M_{B,Ges}$ des Kraftfahrzeugs beträgt vorliegend $M_{B,Ges}$ = 1000 Nm.

In bekannter Art und Weise ist dabei der Reibbremsmomentanteil der Reibungsbremsvorrichtung 20-1 in einem fest vorgegebenen, konstanten Reibmomentverhältnis B1/B2 auf die erste Achse A1 und die zweite Achse A2 aufgeteilt. Vorliegend beträgt das Reibmomentverhältnis B1/B2 = 60%/40% = 0,6/0,4.

Über eine Steuer-Regeleinheit 22 sind die beiden Bremsvorrichtungen 20-1, 20-2 derart ansteuerbar, dass das Gesamtbremsmoment in einem vorgebbaren, d.h. gewünschten, Bremsmomentverhältnis W1/W2 auf die erste und zweite Achse A1 und A2 aufgeteilt wird. Vorliegend soll das gewünschte Bremsmomentverhältnis W1/W2 = 50%/50% = 0,5/0,5 sein.

Erfindungsgemäß ist nunmehr vorgesehen, dass bei Stellung des gewünschten Bremsmomentverhältnisses W1/W1 = 0,5/0,5 an einer Achse ein Mindestrekuperationsmoment $M_{B,Rek,Min}$ gestellt wird, welches an dieser Achse für alle Fahrsituationen als rekuperativer Bremsmomentanteil eingestellt verbleibt.

Verfahrensgemäß wird hierzu zunächst bestimmt, an welcher Achse das Mindestrekuperationsmoment $M_{B,Rek,Min}$ zu stellen ist.

Dies erfolgt durch einen Vergleich der Werte W1 und B1. Verfahrensgemäß ist dabei das Mindestrekuperationsmoment $M_{B,Rek,Min}$ an der zweiten Achse A2 zu stellen, wenn W1 < B1, andernfalls, d.h. wenn W1 > B1, ist das Mindestrekuperationsmoment $M_{B,Rek,Min}$ an der ersten Achse A1 zu stellen.

Da - wie ausgeführt - das Reibmomentverhältnis B1/B2= 0,6/0,4 und das gewünschte Bremsmomentverhältnisses W1/W1 = 0,5/0,5 beträgt, ist vorliegend W1<B1 und damit das Mindestrekuperationsmoment $M_{B,Rek,Min}$ an der zweiten A2 zu stellen.

Das Mindestrekuperationsmoment $M_{B,Rek,Min}$ berechnet sich nach der Vorschrift

$$M_{B,Rek,Min,} = M_{B,Ges} * \left( 1 - \frac{W1}{B1} \right)$$

und beträgt vorliegend $M_{B,Rek,Min}$ = 167 Nm.

In einem nächsten Schritt wird verfahrensgemäß das für beide Achsen verbleibende Restreibmoment $M_{B,Reib.Rest}$ berechnet.

Dies erfolgt nach der Vorschrift

$$M_{B,Reib,rest} = M_{B,Ges} * \frac{W1}{B1}$$

und ergibt vorliegend $M_{B,Reib.Rest}$ = 833 Nm.

Anschließend werden noch das an der zweiten Achse A2 zu stellende Restreibmoment $M_{B,Reib,A2}$ und das an der ersten Achse A1 zu stellende Restreibmoment $M'_{B,Reib,A2}$ berechnet.

Dies erfolgt vorliegend nach der Vorschrift

$$M_{B,Reib,A2} = M_{B,Reib,rest} * B2$$

bzw.

$$M_{B,Reib,A1} = M_{B,Reib,rest} * B1$$

ergibt die Werte $M_{B,Reib,A2}$ = 333 Nm und $M_{B,Reib,A1}$ = 500Nm.

Mittels der Regel-Steuereinheit 22 werden nun im Falle einer Bremsanforderung die Reibungsbremsvorrichtung 20-1 und die rekuperative Bremsvorrichtung 20-2 entsprechend angesteuert, so dass an der zweiten Achse A2 das Mindestrekuperationsmoment $M_{B,Rek,Min}$ = 167 Nm und ein Reibmoment $M_{B,Reib,A2}$ = 333 Nm und an der ersten Achse A1 ein Reibmoment $M_{B,Reib,A1}$ = 500Nm als Bremsmoment zur Verfügung gestellt sind.

**Patentansprüche**

1. Verfahren zur Steuerung eines Bremssystems zur Einstellung einer Gesamtbremsmomentaufteilung zwischen einer ersten und einer zweiten Achse (A1, A2) eines Kraftfahrzeugs, wobei das Bremssystem eine Reibungsbremsvorrichtung (20-1) und eine rekuperative Bremsvorrichtung (20-2) umfasst und das Bremssystem ein Gesamtbremsmoment ($M_{B,Ges}$) aufweist, das sich aus einem Reibbremsmomentanteil der Reibungsbremsvorrichtung (20-1) und einem rekuperativen Bremsmomentanteil der rekuperativen Bremsvorrichtung (20-2) zusammensetzt, und das im Falle einer Bremsanforderung gemäß einem vorgebbaren Bremsmomentverhältnis W1/W2 auf die erste und zweite Achse (A1, A2) aufgeteilt wird, und wobei der Reibbremsmomentanteil ($M_{B,Reib}$) der Reibungsbremsvorrichtung (20-1) durch eine konstante Reibbremsmomentverteilung B1/B2 auf die Achsen (A1, A2) aufgeteilt wird, **dadurch gekennzeichnet, dass**, wenn B1≠W1, für eine Achse (A1, A2) ein Mindestrekuperationsmoment ($M_{B,Rek,Min}$) bestimmt wird, das an dieser Achse (A1, A2) gestellt wird und das an dieser Achse (A1, A2) für alle Fahrsituationen als rekuperativer Bremsmomentanteil eingestellt verbleibt.

2. Verfahren nach Anspruch 1,
   **dadurch gekennzeichnet, dass**

die Achse (A1, A2) bestimmt wird, an der das Mindestrekuperationsmoment ($M_{B,Rek,Min}$) zu stellen ist und dass das Mindestrekuperationsmoment ($M_{B,Rek,Min}$) und ein verbleibendes Restreibmoment ($M_{B,Reib,rest}$) berechnet werden und dass die gewünschte Gesamtbremsmomentverteilung unter Berücksichtigung des an der bestimmten Achse (A1, A2) zu stellenden Mindestrekuperationsmoments gestellt wird.

3. Verfahren nach Anspruch 2,
**dadurch gekennzeichnet, dass**
wenn W1 < B1, wobei W1, B1 in [%] bestimmt wird, dass das Mindestrekuperationsmoment ($M_{B,Rek,Min}$) an der zweiten Achse (A2) zu stellen ist,
wobei dann
für das Mindestrekuperationsmoment ($M_{B,Rek,Min}$) gilt:

$$M_{B,Rek,Min,} = M_{B,Ges} * \left(1 - \frac{W1}{B1}\right)$$

sowie für das verbleibende Restreibmoment ($M_{B,Reib.Rest}$) gilt:

$$M_{B,Reib,rest} = M_{B,Ges} * \frac{W1}{B1}$$

und sich dann für die zweite Achse (A2) ein Restreibmomentanteil ($M_{B,Reib}$) von:

$$M_{B,Reib,A2} = M_{B,Reib,rest} * B2$$

ergibt, sowie für die erste Achse (A1) sich ein Restreibmoment ($M_{B,Reib}$) von:

$$M_{B,Reib,A1} = M_{B,Reib,rest} * B1$$

ergibt.

4. Verfahren nach Anspruch 2,
**dadurch gekennzeichnet, dass**
wenn W1 > B1, wobei W1, B1 in [%] bestimmt wird, dass das Mindestrekuperationsmoment ($M_{B,Rek,Min}$) an der ersten Achse (A1) zu stellen ist,
wobei dann
für das Mindestrekuperationsmoment ($M_{B,Rek,Min}$) gilt:

$$M_{B,Rek,Min,} = M_{B,Ges} * \left(1 - \frac{W2}{B2}\right)$$

sowie für das verbleibende Restreibmoment ($M_{B,Reib.Rest}$) gilt:

$$M_{B,Reib,rest} = M_{B,Ges} * \frac{W2}{B2}$$

und sich dann für die erste Achse (A1) ein Restreibmoment ($M_{B,Reib}$) von:

$$M_{B,Reib,A1} = M_{B,Reib,rest} * B1$$

ergibt, sowie für die zweite Achse (A2) sich ein Restreibmoment ($M_{B,Reib}$) von:

$$M_{B,Reib,A2} = M_{B,Reib,rest} * B2$$

ergibt.

**5.** Bremssystem zur Durchführung des Verfahrens gemäß den Ansprüchen 1 bis 4, umfassend eine Reibungsbremsvorrichtung (20-1), eine rekuperative Bremsvorrichtung (20-2) sowie eine Regel-Steuereinheit (22) zur Einstellung der Gesamtbremsmomentaufteilung zwischen den Achsen (A1, A2) des Kraftfahrzeugs im gewünschten Bremsmomentverhältnis W1/W2, wobei der Reibbremsmomentanteil ($M_{B,Reib}$) der Reibungsbremsvorrichtung (20-1) durch eine konstante Reibbremsmomentverteilung B1/B2 auf die Achsen (A1, A2) aufgeteilt ist, wobeidie Regel-Steuereinheit (22) derart eingerichtet ist, das an einer Achse (A1, A2) zu stellende Mindestrekuperationsmoment ($M_{B,Rek,Min}$) und das verbleibende Restreibmoment ($M_{B,Reib,rest}$) zu berechnen und die im gewünschten Bremsmomentverhältnis W1/W2 zu stellende Gesamtbremsmomentaufteilung unter Berücksichtigung des Mindestrekuperationsmoments ($M_{B,Rek,Min}$) an den Achsen (A1, A2) zu stellen, **dadurch gekennzeichnet, dass**, wenn B1≠W1, für eine Achse (A1, A2) ein Mindestrekuperationsmoment ($M_{B,Rek,Min}$) bestimmt wird, das an dieser Achse (A1, A2) gestellt wird und das an dieser Achse (A1, A2) für alle Fahrsituationen als rekuperativer Bremsmomentanteil eingestellt verbleibt.

## Claims

**1.** Method for controlling a braking system for adjusting a total brake power distribution between a first and a second axle (A1, A2) of a motor vehicle, wherein the braking system comprises a friction brake device (20-1) and a regenerative brake device (20-2) and the braking system has a total brake power ($M_{B,Ges}$), which consists of a friction braking torque component of the friction brake device (20-1) and a regenerative braking torque component of the regenerative brake device (20-2), and which is distributed between the first and second axle (A1, A2) in the event of a braking request, in accordance with a predeterminable brake power ratio W1/W2, and wherein the friction braking torque component ($M_{B,Reib}$) of the friction brake device (20-1) is distributed by a constant friction braking torque distribution B1/B2 between the axles (A1, A2), **characterised in that** when B1≠W1 for an axle (A1, A2), a minimum regenerative torque ($M_{B,Rek,Min}$) is determined, which is set at this axle (A1, A2), and which remains set as the regenerative braking torque component at this axle (A1, A2) for all driving situations.

**2.** Method according to claim 1, **characterised in that** the axle (A1, A2) is determined, at which the minimum regenerative torque ($M_{B,Rek,Min}$) must be set and that the minimum regenerative torque ($M_{B,Rek,Min}$) and a remaining residual friction torque ($M_{B,Reib,rest}$) are calculated and that the required total brake power distribution is set by taking account of the minimum regenerative torque to be set at the specified axle (A1, A2).

**3.** Method according to claim 2, **characterised in that** when W1 < B1, wherein W1, B1 are determined as a [%], that the minimum regenerative torque ($M_{B,Rek,Min}$) must be set at the second axle (A2), wherein the following formula applies for the minimum regenerative torque ($M_{B,Rek,Min}$):

$$M_{B,Rek,Min,} = M_{B,Ges} * \left(1 - \frac{W1}{B1}\right)$$

and the following formula applies for the remaining residual friction torque ($M_{B,Reib.Rest}$):

$$M_{B,Reib,rest} = M_{B,Ges} * \frac{W1}{B1}$$

resulting in a residual friction torque ($M_{B,Reib}$) for the second axle (A2) of:

$$M_{B,Reib,A2} = M_{B,Reib,rest} * B2$$

as well as a residual friction torque ($M_{B,Reib}$) for the first axle (A1) of:

$$M_{B,Reib,A1} = M_{B,Reib,rest} * B1$$

**4.** Method according to claim 2, **characterised in that** when W1 > B1, wherein W1, B1 are determined as a [%], that the minimum regenerative torque ($M_{B,Rek,Min}$) must be set at the first axle (A1), wherein the following formula applies for the minimum regenerative torque ($M_{B,Rek,Min}$):

$$M_{B,Rek,Min.} = M_{B,Ges} * \left(1 - \frac{W2}{B2}\right)$$

and the following formula applies for the remaining residual friction torque ($M_{B,Reib.Rest}$):

$$M_{B,Reib,rest} = M_{B,Ges} * \frac{W2}{B2}$$

resulting a residual friction torque ($M_{B,Reib}$) for the first axle (A1) of:

$$M_{B,Reib,A1} = M_{B,Reib,rest} * B1$$

as well as residual friction torque ($M_{B,Reib}$) for the second axle (A2) of:

$$M_{B,Reib,A2} = M_{B,Reib,rest} * B2$$

**5.** Braking system for implementing the method according to claims 1 to 4, comprising a friction brake device (20-1), a regenerative brake device (20-2) as well as an adjustment-control unit (22) for adjusting the total brake power distribution between the axles (A1, A2) of the motor vehicle within the required brake power ratio W1/W2, wherein the friction braking torque component ($M_{B,Reib}$) of the friction brake device (20-1) is distributed by a constant friction braking torque distribution B1/B2 between the axles (A1, A2), wherein the adjustment-control unit (22) is arranged to calculate the minimum regenerative torque ($M_{B,Rek,Min}$) to be set at one axle (A1, A2) and the remaining residual friction torque ($M_{B,Reib,rest}$) and to adjust the total brake power distribution to be set within the required brake power ratio W1/W2 by taking account of the minimum regenerative torque ($M_{B,Rek,Min}$) at the axles (A1, A2), **characterised in that** when B1≠W1 for an axle (A1, A2), a minimum regenerative torque ($M_{B,Rek,Min}$) is determined, which is set at this axle (A1, A2) and which remains set as the regenerative braking torque component at this axle (A1, A2) for all driving situations.

**Revendications**

**1.** Procédé de commande d'un système de freinage permettant de régler une répartition totale du couple de freinage entre un premier et un second axes (A1, A2) d'un véhicule automobile, dans lequel le système de freinage comprend un dispositif de freinage à friction (20-1) et un dispositif de freinage régénératif (20-2) et le système de freinage comporte un couple de freinage total ($M_{B,\ Ges}$) qui se compose d'une proportion de couple de freinage à friction du dispositif de freinage à friction (20-1) et d'une proportion de couple de freinage régénératif du dispositif de freinage régénératif (20-2) et qui est réparti dans le cas d'une demande de freinage selon un rapport de couple de freinage prédéfini W1/W2 sur les premier et second axes (A1, A2), et dans lequel la proportion de couple de freinage à friction ($M_{B,\ Reib}$) du dispositif de freinage à friction (20-1) est répartie par une répartition constante du couple de freinage à friction B1/B2 sur les axes (A1, A2),
**caractérisé en ce que**,
si B1 ≠ W1,
pour un axe (A1, A2), un couple régénératif minimal ($M_{B,\ Rek,\ Min}$) est défini, lequel est réglé sur cet axe (A1, A2) et demeure ajusté sur cet axe (A1, A2) en tant que proportion de couple de freinage régénératif pour toutes les situations de conduite.

2. Procédé selon la revendication 1,
**caractérisé en ce que**,
l'axe (A1, A2) sur lequel le couple régénératif minimal ($M_{B, Rek, Min}$) doit être réglé est défini, et **en ce que** le couple régénératif minimal ($M_{B, Rek, Min}$) et un couple frictionnel résiduel disponible ($M_{B,Reib,rest}$) sont calculés et **en ce que** la répartition totale du couple de freinage souhaitée est ajustée en tenant compte du couple régénératif minimal à régler sur l'axe défini (A1, A2).

3. Procédé selon la revendication 2,
**caractérisé en ce que**,
si W1 < B1, W1, B1 étant définis en [%]
le couple régénératif minimal ($M_{B,Rek,Min}$) doit être réglé sur le second axe (A2), dans lequel alors pour le couple régénératif minimal ($M_{B,Rek,Min}$) s'applique :

$$M_{B,Rek,Min,} = M_{B,Ges} * \left(1 - \frac{W1}{B1}\right)$$

ainsi que pour le couple frictionnel résiduel disponible ($M_{B,Reib.Rest}$) s'applique :

$$M_{B,Reib,rest} = M_{B,Ges} * \frac{W1}{B1}$$

et pour le second axe (A2), il en résulte une proportion de couple frictionnel résiduel ($M_{B,Reib}$) de :

$$M_{B,Reib,A2} = M_{B,Reib,rest} * B2$$

ainsi que pour le premier axe (A1), il en résulte un couple frictionnel résiduel ($M_{B,Reib}$) de :

$$M_{B,Reib,A1} = M_{B,Reib,rest} * B1$$

4. Procédé selon la revendication 2,
**caractérisé en ce que**,
si W1 > B1, W1, B1 étant définis en [%],
le couple régénératif minimal ($M_{B,Rek,Min}$) doit être réglé sur le premier axe (A1), dans lequel alors pour le couple régénératif minimal ($M_{B,Rek,Min}$) s'applique :

$$M_{B,Rek,Min,} = M_{B,Ges} * \left(1 - \frac{W2}{B2}\right)$$

ainsi que pour le couple frictionnel résiduel disponible ($M_{B,Reib.Rest}$) s'applique :

$$M_{B,Reib,rest} = M_{B,Ges} * \frac{W2}{B2}$$

et il en résulte alors pour le premier axe (A1) un couple frictionnel résiduel ($M_{B,Reib}$) de :

$$M_{B,Reib,A1} = M_{B,Reib,rest} * B1$$

ainsi que pour le second axe (A2), il en résulte un couple frictionnel résiduel ($M_{B,Reib}$) de :

$$M_{B,Reib,A2} = M_{B,Reib,rest} * B2$$

5. Système de freinage pour la réalisation du procédé selon les revendications 1 à 4, comprenant un dispositif de freinage à friction (20-1), un dispositif de freinage régénératif (20-2) ainsi qu'une unité de régulation/commande (22) pour le réglage de la répartition totale du couple de freinage entre les axes (A1, A2) du véhicule automobile dans le rapport de couple de freinage souhaité W1/W2, dans lequel la proportion de couple de freinage à friction ($M_{B,Reib}$) du dispositif de freinage à friction (20-1) est répartie par une répartition constante du couple de freinage à friction B1/B2 sur les axes (A1, A2), dans lequel l'unité de régulation/commande (22) est configurée de manière à calculer le couple régénératif minimal ($M_{B, Rek, Min}$) à régler sur un axe (A1, A2) et le couple à friction résiduel disponible ($M_{B,Reib,rest}$) et à régler sur les axes (A1, A2) la répartition totale du couple de freinage à régler dans le rapport de couple de freinage souhaité W1/W2 en tenant compte du couple régénératif minimal ($M_{B, Rek, Min}$),
   **caractérisé en ce que**,
   si B1 ≠ W1,
   pour un axe (A1, A2), un couple régénératif minimal ($M_{B, Rek, Min}$) est défini, lequel est réglé sur cet axe (A1, A2) et demeure ajusté sur cet axe (A1, A2) en tant que proportion de couple de freinage régénératif pour toutes les situations de conduite.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015106746 A1

- US 20130162009 A1